# EUROPÄISCHE PATENTANMELDUNG

(11) **EP 3 686 294 A1**
(43) Veröffentlichungstag der Anmeldung: **29.07.2020**
(21) Anmeldenummer: 20157906.7
(22) Anmeldetag: 15.07.2015
(51) Int. Cl.: C21D 9/02, C21D 8/06

(54) **VERFAHREN ZUM HERSTELLEN VON KALTGEFORMTEN STAHLFEDERN**

(30) Priorität: 04.09.2014 DE 102014112761; 04.09.2014 DE 102014112762
(62) Teilanmeldung aus: 15744893.7
(71) Anmelder: Thyssenkrupp Federn und Stabilisatoren GmbH, 58119 Hagen (DE); thyssenkrupp AG, 45143 Essen (DE)
(72) Erfinder: Lechner, Dieter, 40470 Düsseldorf (DE); Groß, Marcel, 44359 Dortmund (DE); Gabor, Heinz-Georg, 58300 Wetter (DE); Roland, Marco, 44287 Dortmund (DE)
(74) Vertreter: thyssenkrupp Intellectual Property GmbH

(57) **Zusammenfassung**

Die vorliegende Erfindung betrifft eine Feder (3') und/oder einen Drehstab (3") hergestellt aus einem Stahldraht (1) durch Kaltumformen (20', 20") nach einem Verfahren mit den folgenden Schritten:
a) Bereitstellen eines Stahldrahts (1);
b) Thermomechanisches Umformen (12) des in Schritt a) bereitgestellten Stahldrahts (1), oberhalb der Mindestrekristallisationstemperatur des Stahldrahts (1);
c) Abkühlen des in Schritt b) thermomechanisch umgeformten Stahldrahts (1);
d) Vergüten des Stahldrahts (1), umfassend
I. Erwärmen (17);
II. Abschrecken (18);
III. Wiedererwärmen;
IV. Abkühlen;

e) Kaltumformen (20', 20") des in Schritt d) vergüteten Stahldrahts (1), bei einer Kaltumformtemperatur, wobei die Kaltumformtemperatur eine Temperatur unterhalb der Mindestrekristallisationstemperatur des Stahldrahts (1) ist;
f) Vereinzeln (21) des in Schritt e) kaltumgeformten Stahldrahts (1);
wobei beim Abkühlen des Stahldrahts (1) in Schritt c) auf eine Temperatur unterhalb der Mindestrekristallisationstemperatur derart abgekühlt wird, dass sich in dem Stahldraht (1) wenigstens ein teilweise ferritisch-perlitisches Gefüge einstellt.

## Beschreibung

Die vorliegende Erfindung betrifft kaltumgeformte Federn und/oder Drehstäbe, ein Verfahren zum Herstellen von kaltgeformten Federn und/oder Drehstäben und die Verwendung eines Stahldrahtes zur Herstellung von kaltgeformten Federn und/oder Drehstäben.

### Stand der Technik

Federn und Drehstäbe aus verformtem Stahldraht sind im Stand der Technik in einer Vielzahl von Ausführungsformen bekannt. Drehstäbe werden beispielsweise auch als Drehstabfedern, Stabilisierungsdrehstäbe oder Torsionsfederstäbe bezeichnet. Eingesetzt werden Stahlfedern und Drehstabfedern insbesondere in Kraftfahrzeugen, wobei Stahlfedern beispielsweise in Dämpfungssystemen zur Dämpfung von Fahrbahnunebenheiten und Drehstabfedern zur Stabilisierung gegen Neigung und Verwindung der Karosserie insbesondere bei Kurvenfahrt eines Kraftfahrzeugs, Fahrten eines Kraftfahrzeugs über wechselnde Fahrbahnoberflächen und bei Fahrbahnunebenheiten eingesetzt werden. Die Formgebung des Stahldrahts zu Federn und Drehstäben kann nach einem Kalt- und/oder Warmumformverfahren erfolgen. Vor dieser Formgebung kann der Stahldraht verschiedene Vorbereitungsschritte erfahren, welche die Feder- und- Festigkeitseigenschaften beeinflussen. Beispielsweise wird der zur Herstellung einer Stahl- und/oder Drehstabfeder verwendete Federstahl einer thermomechanischen Umformung (TMU) unterzogen, um dessen konstruktiv nutzbare Festigkeit und Zähigkeit zu erhöhen und weitere bestimmte Gebrauchseigenschaften eines Werkstoffs zu verbessern. So können Federn und/oder Drehstäbe mit hoher/n Festigkeit(en) bei vergleichsweise geringem Materialeinsatz und somit geringem Gewicht und Materialkosten hergestellt werden. Im Stand der Technik sind eine Reihe verschiedener Verfahren, welche eine thermische Behandlung und dann eine Umformung umfassen, bekannt. Bei einer Kaltverformung ist die Verformbarkeit des Stahldrahtes begrenzt, da infolge von Kaltverfestigung seine Zähigkeit und Verformbarkeit mit steigendem Verformungsgrad abnimmt.

Bei der Serienproduktion von warmgeformten Schraubenfedern wird die TMU bereits in Form eines Schrägwalzprozesses eingesetzt, hier allerdings nur an vorgefertigten, vereinzelten Federstäben. Ein solches Verfahren ist in der DE 103 15 418 B3 offenbart. Die TMU erfolgt am Federstab durch einen einstufigen Schrägwalzprozess direkt vor dem Warmwickeln der Schraubenfeder. Die warmgeformte Feder wird in Öl abgeschreckt, wodurch sich ein martensitisches Gefüge ausbildet.

Beim Kaltformen von Schraubenfedern werden keine Federstäbe eingesetzt. Vielmehr wird ein vorvergüteter, also bereits gehärteter und angelassener Draht im kalten Zustand durch Kaltwickeln in die endgültige Schraubenform gebracht; erst anschließend erfolgt die Trennung vom fortlaufenden Draht und somit die Vereinzelung des Materials.

In der DE 198 39 383 C2 ist ein Verfahren zur thermomechanischen Behandlung von Stahl für torsionsbeanspruchte Federelemente beschrieben. Ein Ausgangsmaterial wird zügig auf eine Temperatur von 1080°C erhitzt und austenitisiert. Anschließend wird das Ausgangsmaterial einer TMU unterzogen, wodurch eine Rekristallisation erreicht wird. Anschließend, ohne zwischenzeitliche Abkühlung, wird das Ausgangsmaterial durch Abschrecken gehärtet.

Dieses Verfahren wird in einer integralen Fertigungsstraße durchgeführt, in der von der TMU bis zur Abschreckung sämtliche Schritte durchgeführt werden. Durch die damit erforderliche unmittelbare Verkettung von thermomechanischer Umformung und Vergütung ergeben sich die folgenden Nachteile:
1. Längenänderungen am Draht durch die thermomechanische Umformung, zumeist Walzen, wirken sich unmittelbar auf die Prozessparameter der unmittelbar anschließenden Vergütung aus,
2. Die Prozesszeiten und -temperaturen der thermomechanischen Umformung und der Vergütung müssten aufeinander abgestimmt werden, was prozesstechnisch schwierig umzusetzen ist. Denn für die thermomechanische Umformung wird eine Temperatur lediglich knapp oberhalb der Austenitisierungstemperatur des Drahtwerkstoffs bevorzugt, während für das Vergüten ein Erhitzen auf eine deutlich höhere Temperatur vorteilhaft ist,
3. Die Walzvorrichtung für die TMU und die Vergütevorrichtung weisen unterschiedliche Durchlaufzeiten pro Drahtlängeneinheit auf; um diesem Konflikt zu lösen sind sehr komplexe Regelungs- und Steuerungsaufgaben zu lösen,
4. Der Durchsatz der Fertigungsstraße würde dann durch die langsamste Prozesskomponente definiert; die schnelleren Prozesskomponenten sind daher nicht ausgelastet und arbeiten daher unwirtschaftlich,
5. Das in der Fertigung von Federn zur thermomechanischen Umformung angewendete einstufige Schrägwalzen (entsprechend der oben genannten DE 103 15 418 B3) führt zu einer Rotation des Drahtes um seine Längsachse mit einer Geschwindigkeit von 400 U/min und mehr. Dies lässt sich zwar mit vereinzelten Federstäben durchführen, nicht aber bei der Verarbeitung von Endlosdrähten. Bei den nachfolgenden Prozessschritten wie Abschrecken, Anlassen und Aufhaspeln würde der Draht entsprechend rotieren, was zumindest stark erhöhte Anforderungen an diese Einrichtungen stellen würde. In der Praxis wurde die Umsetzbarkeit eines solchen integrierten Prozesses bei Endlosdraht noch nicht erprobt. Zwar ist es bereits bekannt, anstelle des Schrägwalzens auch ein zweistufiges Kaliberwalzen zu verwenden. Die vorstehenden Nachteile 1 bis 4 bestehen auch bei der Anwendung des Kaliberwalzens.

Die DE 198 39 383 C2 schlägt in einer Variante (Sp. 3, Z. 4-20) vor, nach der thermomechanischen Umformung den Federstahl zunächst auf niedrige Temperatur abzuschrecken und anschließend erneut einem Vergütungsprozess mit starker Erhitzung und Abschreckung zuzuführen. Diese Variante weist aber weitgehend die oben angesprochenen Nachteile auf.

Der vorliegenden Erfindung liegt daher die Aufgabe zugrunde, eine(n) verbesserte(n) Feder und/oder Drehstab und ein verbessertes Verfahren zum Herstellen der/s verbesserte(n) Feder und/oder Drehstabs bereitzustellen, bei welchem die zuvor genannten Nachteile umgangen werden. Insbesondere soll mit dem verbesserten Verfahren zum Herstellen der/s verbesserte(n) Feder und/oder Drehstabs ein stabiler Fertigungsprozess mit verlässlicher Erfüllung von hohen Qualitätsanforderungen zur Verfügung gestellt werden. Zudem soll das verbesserte Verfahren zum Herstellen der/s verbesserte(n) Feder und/oder Drehstabs einfach und sicher in bereits bestehende Verfahren implementiert werden können.

### Offenbarung der Erfindung

Diese Aufgabe wird mit einer Feder und/oder einem Drehstab nach Anspruch 1, und einem Verfahren nach Anspruch 5 gelöst.

Die erfindungsgemäße Feder weist gegenüber konventionellen Federn den Vorteil auf, dass der erfindungsgemäße Federdraht im Vergleich zu konventionellen Federdrähten eine höhere Zähigkeit aufweist. Aufgrund der höheren Zähigkeit des Federdrahts kann die erfindungsgemäße Feder mit höheren Spannungen beaufschlagt werden. Weitere Vorteile der erfindungsgemäßen Feder sind ein im Vergleich zu konventionellen Federn geringeres Gewicht und eine längere Lebensdauer. Zudem kann die Erfindungsgemäße Feder im Vergleich zu konventionellen Federn insbesondere mit kleineren Abmessungen und einer kürzeren Federlänge ausgelegt werden, womit die erfindungsgemäße Feder auch in kleinen Bauräumen angeordnet werden kann.

Der erfindungsgemäße Drehstab weist gegenüber konventionellen Drehstäben den Vorteil auf, dass der erfindungsgemäße Federdraht im Vergleich zu konventionellen Federdrähten eine höhere Zähigkeit aufweist. Aufgrund der höheren Zähigkeit des Federdrahts kann der erfindungsgemäße Drehstab mit höheren Spannungen beaufschlagt werden. Ein weiterer Vorteil des erfindungsgemäßen Drehstabs ist eine im Vergleich zu konventionellen Drehstäben längere Lebensdauer.

Das erfindungsgemäße Verfahren zum Herstellen von Federn und/oder Drehstäben weist gegenüber konventionellen Verfahren den Vorteil auf, dass die/der erfindungsgemäße Feder und/oder der Drehstab einen Federdraht mit einer im Vergleich zu konventionellen Federdrähten höheren Zähigkeit aufweisen. Ein weiterer Vorteil des erfindungsgemäßen Verfahrens ist, dass es in bereits bestehende Verfahren einfach und zuverlässig integriert werden kann. Zudem weist das erfindungsgemäße Verfahren die Vorteile auf, dass
- durch die prozesstechnische Trennung von TMU und Vergütung für jeden der beiden Schritte die optimalen Prozessparameter wie z.B. Temperaturen eingestellt werden können,
- durch die prozesstechnische Trennung von TMU von den nachfolgenden Fertigungsschritten für jeden der Schritte die optimalen Durchlaufgeschwindigkeiten eingestellt werden können,
- eventuell zusätzlich notwendige Bearbeitungsschritte am Stahldraht und/oder Stab wie beispielsweise das präzise Schneiden auf eine gewünschte Länge oder die Herstellung inkonstanter Stahldraht- und/oder Stabdurchmesser vorgenommen werden können, ohne die Verfahrenszeit bis zur Abschreckhärtung zu verlängern,
- die Gefahr, dass es im Stahldraht und/oder Stab zu nachteiligen Gefügeveränderungen infolge langen Haltens auf sehr hoher Temperatur kommt, wird verringert,
- der Stillstand einer Prozesskomponente (z.B. für Wartung oder aufgrund eines Defekts) keine unmittelbaren Auswirkungen auf die gesamte Fertigungsstraße hat und die anderen Verfahrensschritte weiter produzieren können,
- nicht für jede Wickelanlage eine separate TMU-Einrichtung vorgehalten werden muss und die Flexibilität der Produktion erhöht wird, da die Auswahl der einzusetzenden Wickelanlage unabhängig von der TMU-Einrichtung erfolgen kann,
- die Bearbeitung von Federstäben mit einem inkonstanten, insbesondere variierenden Drahtdurchmesser ist mit dem erfindungsgemäßen Verfahren einfach und ohne erhöhten Aufwand möglich.

Gegenstand der Erfindung ist daher eine Feder und/oder ein Drehstab, hergestellt aus einem Stahldraht durch Kaltumformen nach einem Verfahren mit den folgenden Schritten:
a) Bereitstellen eines Stahldrahts;
b) Thermomechanisches Umformen des in Schritt a) bereitgestellten Stahldrahts, oberhalb der Mindestrekristallisationstemperatur des Stahldrahts, wobei der Stahldraht ein wenigstens teilweise austenitisches Gefüge aufweist;
c) Abkühlen des in Schritt b) thermomechanisch umgeformten Stahldrahts;
d) Vergüten des Stahldrahts, umfassend
   I. Erwärmen des in Schritt c) abgekühlten Stahldrahts wenigstens auf eine Härtungstemperatur, welche gleich oder größer ist als die Austenitstarttemperatur;
   II. Abschrecken des in Schritt I. wenigstens auf die Härtungstemperatur erwärmten Stahldrahts auf eine erste Abkühltemperatur, wobei die erste Abkühltemperatur eine Temperatur unterhalb der Mindestrekristallisationstemperatur des Stahldrahts ist und sich ein wenigstens teilweise martensitisches Gefüge einstellt;
   III. Wiedererwärmen des in Schritt II. abgeschreckten Stahldrahts auf eine erste Anlasstemperatur, welche kleiner ist als die Austenitstarttemperatur;
   IV. Abkühlen des in Schritt III. wiedererwärmten Stahldrahts auf eine zweite Abkühltemperatur, wobei die zweite Abkühltemperatur wenigstens kleiner ist als die erste Anlasstemperatur;
e) Kaltumformen des in Schritt d) vergüteten Stahldrahts, bei einer Kaltumformtemperatur, wobei die Kaltumformtemperatur eine Temperatur unterhalb der Mindestrekristallisationstemperatur des Stahldrahts ist;
f) Vereinzeln des in Schritt e) kaltumgeformten Stahldrahts; wobei beim Abkühlen des Stahldrahts in Schritt c) auf eine Temperatur unterhalb der Mindestrekristallisationstemperatur derart abgekühlt wird, dass sich in dem Stahldraht wenigstens ein teilweise ferritisch-perlitisches Gefüge einstellt.

Ein weiterer Gegenstand der Erfindung ist ein Verfahren zum Herstellen einer Feder und/oder eines Drehstabs mit den Schritten:
a) Bereitstellen eines Stahldrahts;
b) Thermomechanisches Umformen des in Schritt a) bereitgestellten Stahldrahts, oberhalb der Mindestrekristallisationstemperatur des Stahldrahts, wobei der Stahldraht ein wenigstens teilweise austenitisches Gefüge aufweist;
c) Abkühlen des in Schritt b) thermomechanisch umgeformten Stahldrahts;
d) Vergüten des Stahldrahts, umfassend
   I. Erwärmen des in Schritt c) abgekühlten Stahldrahts wenigstens auf eine Härtungstemperatur, welche gleich oder größer ist als die Austenitstarttemperatur;
   II. Abschrecken des in Schritt I. wenigstens auf die Härtungstemperatur erwärmten Stahldrahts auf eine erste Abkühltemperatur, wobei die erste Abkühltemperatur eine Temperatur unterhalb der Mindestrekristallisationstemperatur des Stahldrahts ist und sich ein wenigstens teilweise martensitisches Gefüge einstellt;
   III. Wiedererwärmen des in Schritt II. abgeschreckten Stahldrahts auf eine erste Anlasstemperatur, welche kleiner ist als die Austenitstarttemperatur;
   IV. Abkühlen des in Schritt III. wiedererwärmten Stahldrahts auf eine zweite Abkühltemperatur, wobei die zweite Abkühltemperatur wenigstens kleiner ist als die erste Anlasstemperatur;
e) Kaltumformen des in Schritt d) vergüteten Stahldrahts, bei einer Kaltumformtemperatur, wobei die Kaltumformtemperatur eine Temperatur unterhalb der Mindestrekristallisationstemperatur des Stahldrahts ist;
f) Vereinzeln des in Schritt e) kaltumgeformten Stahldrahts; wobei beim Abkühlen des Stahldrahts in Schritt c) auf eine Temperatur unterhalb der Mindestrekristallisationstemperatur derart abgekühlt wird, dass sich in dem Stahldraht wenigstens ein teilweise ferritisch-perlitisches Gefüge einstellt.

Ein weiterer Gegenstand der Erfindung ist die Verwendung eines Stahldrahts zur Herstellung von kaltgeformten Federn und/oder Drehstäben mit den Schritten:
a) Bereitstellen eines Stahldrahts;
b) Thermomechanisches Umformen des in Schritt a) bereitgestellten Stahldrahts, oberhalb der Mindestrekristallisationstemperatur des Stahldrahts, wobei der Stahldraht ein wenigstens teilweise austenitisches Gefüge aufweist;
c) Abkühlen des in Schritt b) thermomechanisch umgeformten Stahldrahts;
d) Vergüten des Stahldrahts, umfassend
   I. Erwärmen des in Schritt c) abgekühlten Stahldrahts wenigstens auf eine Härtungstemperatur, welche gleich oder größer ist als die Austenitstarttemperatur;
   II. Abschrecken des in Schritt I. wenigstens auf die Härtungstemperatur erwärmten Stahldrahts auf eine erste Abkühltemperatur, wobei die erste Abkühltemperatur eine Temperatur unterhalb der Mindestrekristallisationstemperatur des Stahldrahts ist und sich ein wenigstens teilweise martensitisches Gefüge einstellt;
   III. Wiedererwärmen des in Schritt II. abgeschreckten Stahldrahts auf eine erste Anlasstemperatur, welche kleiner ist als die Austenitstarttemperatur;
   IV. Abkühlen des in Schritt III. wiedererwärmten Stahldrahts auf eine zweite Abkühltemperatur, wobei die zweite Abkühltemperatur wenigstens kleiner ist als die erste Anlasstemperatur;
e) Kaltumformen des in Schritt d) vergüteten Stahldrahts, bei einer Kaltumformtemperatur, wobei die Kaltumformtemperatur eine Temperatur unterhalb der Mindestrekristallisationstemperatur des Stahldrahts ist;
f) Vereinzeln des in Schritt e) kaltumgeformten Stahldrahts; wobei beim Abkühlen des Stahldrahts in Schritt c) auf eine Temperatur unterhalb der Mindestrekristallisationstemperatur derart abgekühlt wird, dass sich in dem Stahldraht wenigstens ein teilweise ferritisch-perlitisches Gefüge einstellt.

Durch die Bildung des perlitischen-ferritischen Gefüges wird der Draht in einen Zwischenzustand versetzt, in dem sich der Draht durch eine hohe Weichheit und damit auch eine gute Handhabbarkeit auszeichnet. Aufgrund dieser Weichheit lässt sich eine prozesstechnische Trennung der TMU von dem nachfolgenden Vergüten erreichen. In der Zeit zwischen der TMU und dem Vergüten lässt sich der Draht deutlich besser handhaben, da er nicht in einer gehärteten Form vorliegt.

Die Erfindung kann sowohl in einer Feder als auch einem Drehstab, sowie in einem erfindungsgemäßen Federdraht, als auch in einem Verfahren zum Herstellen der Feder und/oder des Drehstabs, als auch des Federdrahts, sowie in der Verwendung eines Stahldrahts zur Herstellung der Feder und/oder des Drehstabs verwirklicht sein.

### Detaillierte Beschreibung der Erfindung

Im Rahmen der vorliegenden Erfindung wird unter einer Feder ein Bauteil aus einem Stahldraht verstanden, welches unter Belastung nachgibt und nach Entlastung in die ursprüngliche Gestalt zurückkehrt. Insbesondere kann eine Feder ein aus Stahldraht schrauben- oder spiralförmig gewickeltes oder stabförmig gestrecktes oder abgeknicktes Bauteil sein. Beispiele für Federn sind ausgewählt aus einer Gruppe von Schraubenfedern, insbesondere Schraubendruckfedern, Schraubenzugfedern, Kegelfedern, Sprungfedern, Biegefedern, insbesondere Spiralfedern, gewundenen Torsionsfedern und Kombinationen hiervon.
Im Rahmen der vorliegenden Erfindung wird unter einem Drehstab ein Stabelement verstanden, bei welchem bei fester Einspannung an beiden Enden, die befestigten Enden gegeneinander eine Schwenkbewegung um die Stabelementachse ausführen. Insbesondere findet die mechanische Beanspruchung maßgeblich durch ein tangential zur Stabelementachse angreifendes Drehmoment statt. Unter Drehstäben werden beispielsweise auch ein gerader Torsionsstab, ein gewinkelter Torsionsstab, eine Drehstabfeder, eine Torsionsfeder, ein Stabilisierungsdrehstab, ein Stabilisator, ein geteilter Stabilisator und Kombinationen hiervon verstanden.
Unter Kaltumformen im Rahmen der vorliegenden Erfindung wird verstanden, wenn der Stahldraht unterhalb der Rekristallisationstemperatur verformt wird. Insbesondere ist bei der Kaltumformung die Verformbarkeit begrenzt, da infolge von Kaltverfestigung die Zähigkeit und Verformbarkeit eines Werkstoffs, wie beispielsweise Stahl mit steigendem Verformungsgrad abnimmt. Beispiele für ein Kaltumformen sind Kaltwickeln, Kaltbiegen und Kombinationen hiervon.

Die Rekristallisationstemperatur ist diejenige Glühtemperatur, die bei einem kaltverformten Gefüge mit vorgegebenem Verformungsgrad in einem begrenzten Zeitraum zu einer vollständigen Rekristallisation führt. Die Rekristallisationstemperatur besitzt keinen festen Wert, sondern ist abhängig von der Höhe der vorangegangenen Kaltverformung und der Schmelztemperatur des Werkstoffs, insbesondere der Schmelztemperaturen von Stählen. Beispielsweise ist bei Stählen die Rekristallisationstemperatur auch abhängig von dem Kohlenstoffgehalt und der Legierung des jeweiligen Stahles.

Als Mindestrekristallisationstemperatur wird die unterste Temperatur verstanden, bei der eine Rekristallisation, insbesondere eine Rekristallisation des Gefüges eines Stahldrahts, noch erfolgt.

Unter Austenitstarttemperatur wird im Rahmen der Erfindung eine Temperatur verstanden, bei welcher eine Umwandlung in ein wenigstens teilweises austenitisches Gefüge erfolgt. Insbesondere erfolgt bei einer Austenitisierungstemperatur eine Umwandlung in ein wenigstens teilweises austenitisches Gefüge.

Ein Vergüten im Sinne der vorliegenden Erfindung kann ein teilweises oder vollständiges Vergüten sein.

Unter einer Wärmeübertragung, wie diese beispielweise in Schritt b) bei dem thermomechanischen Umformen, in Schritt d)I. bei dem Erwärmen, in Schritt d)III. beim dem Wiedererwärmen und/oder einer anderen Wärmeübertragung im Rahmen der Erfindung erfolgt, wird eine solche verstanden, welche ausgewählt ist unter einer Wärmeleitung, insbesondere einer konduktiven Erwärmung, einer Wärmestrahlung, insbesondere einer Infrarot-Strahlung, einer induktiven Erwärmung, einer Konvektion, insbesondere einem Heizgebläse und Kombinationen hiervon.

Ein Stabilisator wird im Rahmen der Erfindung auch als ein Stabilisierungsdrehstab verstanden. Insbesondere werden auch Abschnitte von Stabilisatoren und/oder geteilte Stabilisatoren als erfindungsgemäße Stabilisatoren verstanden.

In einer bevorzugten Ausführungsform der Erfindung wird die Herstellung der Feder und/oder des Drehstabs mit einem Stahldraht aufweisend einen Kohlenstoffgehalt im Bereich von 0,02 bis 0,8 Gew.-% durchgeführt. Insbesondere werden im Rahmen der Erfindung unter Stählen, aufweisend einen Kohlenstoffgehalt im Bereich von 0,02 bis 0,8 Gew.-% untereutektoide Stähle verstanden.

In einer bevorzugten Ausführungsform der Erfindung ist die Reihenfolge der Schritte e) und f) beliebig.

In einer bevorzugten Ausführungsform der Erfindung erfolgt das Thermomechanische Umformen in Schritt b) bei einer Temperatur, welche gleich oder größer der Austenitstarttemperatur, vorzugsweise gleich oder größer der Austenitendtemperatur, besonders bevorzugt im Bereich von der Austenitendtemperatur bis 50 °C größer als die Austenitendtemperatur ist.

Unter Austenitendtemperatur wird im Rahmen der Erfindung eine Temperatur verstanden, bei welcher die Umwandlung in ein austenitisches Gefüge abgeschlossen ist.

So ist in einer bevorzugten Ausgestaltung vorgesehen, dass in diesem Zwischenzustand, also nach der TMU und vor der Vergütung, der Draht, der nun immer noch in einem fortlaufenden Draht vorhanden ist, zu Lager- oder Transportzwecken aufgerollt, insbesondere aufgehaspelt wird. Dies ist umso leichter möglich, je weicher der Draht ist. Für das nachfolgende Vergüten wird der Draht wieder abgehaspelt. Das nachfolgende Vergüten ist so vollständig von der TMU entkoppelt.

Der erfindungsgemäße Verfahrensablauf ermöglicht es auch, die Vergütung im Hinblick auf den Temperaturbereich von der TMU zu entkoppeln. Während die optimale Umformtemperatur während der TMU knapp oberhalb der Austenitisierungstemperatur des Drahtwerkstoffs, insbesondere weniger als 50°C oberhalb der Austenitisierungstemperatur des Drahtwerkstoffs liegt, ist für die Vergütung ein Erhitzen auf wesentlich höhere Temperaturen vorteilhaft. So ist in einer bevorzugten Ausgestaltung vorgesehen, dass die Vergütungstemperatur oberhalb der Umformtemperatur liegt, insbesondere mehr als 50°C oberhalb der Austenitisierungstemperatur des Drahtwerkstoffs. Durch die prozesstechnische Trennung von TMU und Vergütung kann für jeden der beiden Schritte die optimale Temperatur eingestellt werden.

Ein weiterer Vorteil des erfindungsgemäßen Verfahrensablaufs ist es, dass durch die Entkopplung der beiden Prozesse Vergüten und TMU beide Prozesse bei für den jeweiligen Prozess optimalen (benötigten) Durchlaufgeschwindigkeiten des Drahtes durchgeführt werden können. Die Durchlaufgeschwindigkeit des Drahtes bei der TMU ist nicht zwingend dieselbe, wie bei der Vergütung. Bei der integralen Fertigungsstraße hingegen gibt der langsamere der beiden Prozesse die Durchlaufgeschwindigkeit für beide Prozesse vor, d.h., einer der beiden Prozesse arbeitet nicht bei optimalen Bedingungen, also unwirtschaftlich.

Ein weiterer Vorteil des erfindungsgemäßen Verfahrens und der erfindungsgemäßen Feder und/oder des Drehstabs ist es, dass der erfindungsgemäße Federdraht ein im Vergleich zu konventionellen Federdrähten feinkörnigeres Gefüge aufweist.

In einer bevorzugten Ausführungsform der Erfindung erfolgt das Abkühlen des Drahts in Schritt c) wenigstens auf eine Temperatur unterhalb der Mindestrekristallisationstemperatur, vorzugsweise unterhalb einer Temperatur von 200 °C, besonders bevorzugt unterhalb einer Temperatur von 50 °C.

Die Abkühlung nach der TMU erfolgt bevorzugt mit einer so geringen Abkühlgeschwindigkeit, dass sichergestellt wird, dass sich ein perlitisch-ferritisches Gefüge einstellt. Der Fachmann kann hierzu das zum Werkstoff passenden ZTU-Schaubild heranziehen, aus dem sich die Abkühlgeschwindigkeit ablesen lässt.

Grundsätzlich erscheint die vorgeschlagene Vorgehensweise gegenüber dem bekannten Verfahren zwar unwirtschaftlich zu sein, da nunmehr der Draht für das Kaltumformverfahren erneut erwärmt werden muss, nachdem die zwischenzeitliche Abkühlung erfolgt ist. Es hat sich aber herausgestellt, dass durch die damit erreichte Entkopplung die eingangs genannten Nachteile vermieden werden können, was technisch besser und wirtschaftlich vorteilhafter zu bewerten ist als die durch die integrale Fertigung bedingten Vorteile. Ferner kann die zwischenzeitliche Abkühlung auch gezielt unter Mitwirkung eines Wärmetauschers erfolgen, wodurch die Abwärme des Abkühlens wiederum der TMU oder der anschließenden Vergütung mit einem recht hohen Wirkungsgrad zur Verfügung stehen kann.

Erfindungsgemäß kann nun ein bereits vorbehandelter Draht zur Herstellung von kaltgeformten Stahlfedern, insbesondere Schraubenfedern oder Drehstabfedern aus Stahl, verwendet werden. Der Draht weist eine Temperatur von weniger als 200°C, insbesondere Raumtemperatur, auf. Ferner ist der Draht bereits einer thermomechanischen Umformung unterzogen worden und weist ein perlitisch-ferritisches Gefüge auf. Dieser Draht wird nun vergütet, wobei das Vergüten folgende Schritte umfasst: ein Erhitzen des Drahts auf eine Vergütungstemperatur oberhalb der Austenitisierungstemperatur des Drahtwerkstoffs und Austenitisierung; ein Abschrecken des auf Vergütungstemperatur erhitzten Drahts zur Bildung eines martensitischen Gefüges im Draht; ein Anlassen des Drahts. Anschließend erfolgt das Kaltumformen des Drahts zur Erzeugung der kaltgeformten Stahlfeder. Die bezüglich des Verfahrens genannten Vorteile und Weiterbildungen sind auf diese Verwendung anwendbar.

In einer bevorzugten Ausführungsform der Erfindung erfolgt das Erwärmen des Stahldrahts in Schritt d)I. auf eine Temperatur, welche gleich oder größer der Austenitstarttemperatur, vorzugsweise gleich oder größer der Austenitendtemperatur ist.

In einer bevorzugten Ausführungsform der Erfindung erfolgt bei dem Abschrecken des Drahtes in Schritt d)II. das Stahldrahtgefüge eine wenigstens teilweise Umwandlung in Martensit erfährt und der Stahldraht wenigstens eine Martensitstarttemperatur erfährt, wobei das Abschrecken des Drahtes vorzugsweise auf die erste Abkühltemperatur des Stahldrahts von kleiner oder gleich 200 °C erfolgt.

Unter Martensitstarttemperatur wird im Rahmen der Erfindung eine Temperatur verstanden, bei welcher eine Umwandlung in ein wenigstens teilweises martensitisches Gefüge erfolgt.

In einer bevorzugten Ausführungsform der Erfindung wird mit dem Vergüten des Stahldrahts in Schritt d) der Härteverlauf über den Querschnitt des Stahldrahtes eingestellt. Beispielsweise kann die Härte des Stahldrahts von dem Rand zu dem Kern des Stahldrahts variieren. Insbesondere kann die Härte von dem Rand zu dem Kern des Stahldrahts abfallen oder ansteigen oder auch gleichgroß sein. Vorzugsweise fällt die Härte von dem Rand zu dem Kern des Stahldrahts ab. Beispielsweise kann dies durch Randerwärmen des Stahldrahts mit anschließendem Wiederabkühlen im Anschluss an einen der Schritte d) bis f) erfolgen.

Bevorzugt wird das Verfahren angewendet bei der Herstellung von kaltgeformten Schraubenfedern. Hierbei wird der Draht zu Stahlfedern kaltgewunden; erst nach dem Kaltwinden der Schraubenfedern werden diese vom Draht getrennt, insbesondere vereinzelt.

Ebenfalls bevorzugt wird das Verfahren angewendet bei der Herstellung von kaltgeformten Drehstabfedern. Hierbei wird der Draht nach dem Vergüten zu Stäben abgelängt. Danach werden die Stäbe durch Kaltverbiegen zu Drehstabfedern, insbesondere Stabilisatoren für Kraftfahrzeugfahrwerke, weiterverarbeitet.

In einer bevorzugten Ausführungsform der Erfindung wird im Anschluss an einen der Schritte d) bis f) in einem weiteren Schritt g) ein Randerwärmen und nachfolgendes Wiederabkühlen des Stahldrahts durchgeführt, wobei die Härte von dem Rand zu dem Kern des Stahldrahts ansteigt.

In einer bevorzugten Ausführungsform der Erfindung wird im Anschluss an einen der Schritte c) bis f) in einem weiteren Schritt h) der Stahldraht aufgehaspelt.

In einer bevorzugten Ausführungsform der Erfindung wird im Anschluss an einen der Schritte c) bis g) in einem weiteren Schritt i) eine Oberflächenbehandlung des Stahldrahts durchgeführt, bei welcher die Oberfläche des Stahldrahts wenigstens teilweise abgetragen wird.

In einer bevorzugten Ausführungsform der Erfindung wird weist die nach dem erfindungsgemäßen Verfahren hergestellte Feder und/oder der Drehstab einen Martensitanteil von größer 40 Vol.-%, vorzugsweise größer als 80 Vol.-%, besonders bevorzugt größer als 90 Vol.-%, ganz besonders bevorzugt größer als 95 Vol.-% auf.

In einer bevorzugten Ausführungsform der Erfindung wird das Verfahren mit einem Stahldraht mit einem Kohlenstoffgehalt im Bereich von 0,02 bis 0,8 Gew.-% durchgeführt.

In einer bevorzugten Ausführungsform der Erfindung wird zur Herstellung von kaltgeformten Federn und/oder Drehstäben ein Stahldraht, welcher einen Kohlenstoffgehalt im Bereich von 0,02 bis 0,8 Gew.-% aufweist, verwendet.

### Bevorzugtes Ausführungsbeispiel der Erfindung

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Darstellung des erfindungsgemäßen Verfahrens gemäß einer Ausführungsform der Erfindung,
- Fig. 2: eine schematische Darstellung des erfindungsgemäßen Verfahrens gemäß einer Ausführungsform der Erfindung,
- Fig. 3: einen Temperaturverlauf zu den Ausführungsformen nach Figuren 1 und 2.

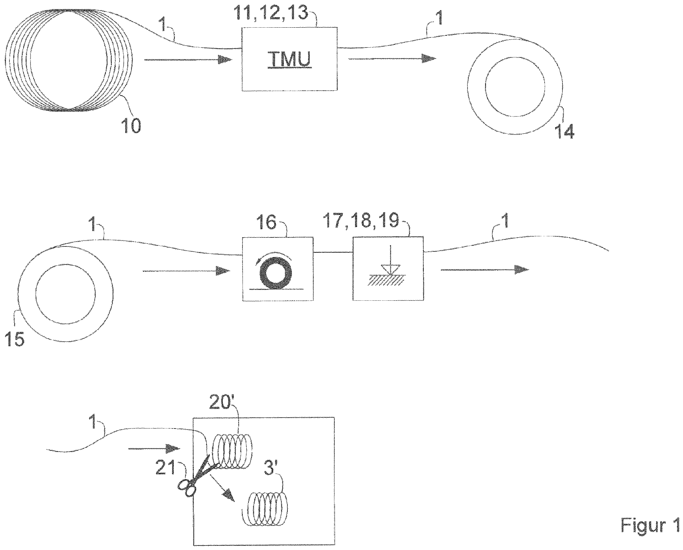

Die Figuren 1 bis 3 werden nachfolgend gemeinsam beschrieben. Ein gewickelter Stahldraht 1, insbesondere ein Walzdraht, wird auf einem Ring 10 bereitgestellt. Der Stahldraht 1 wird zunächst erwärmt auf eine Umformtemperatur T1 von etwa 800°C, was oberhalb der Mindestrekristallisationstemperatur des Stahldrahts, insbesondere oberhalb der Austenitisierungstemperatur Ac3 von im vorliegenden Fall 785°C, 11 liegt. Nun wird der Stahldraht 1 einer thermomechanischen Umformung (TMU) 12 unterzogen. Das Erhitzen 11 kann entfallen, wenn sich die TMU unmittelbar an einen Stahldrahtwalzprozess anschließt und die Temperatur des Stahldrahts bereits auf der gewünschten Umformtemperatur T1 liegt.

Das thermomechanische Umformen 12 kann durch mehrstufiges Kaliberwalzen erfolgen. Anschließend wird der Stahldraht 1 derart langsam abgekühlt 13, dass sich im Stahldraht wenigstens ein teilweise ferritisch-perlitisches Gefüge, also ein weiches Gefüge, einstellt. Das Abkühlen kann ohne weitere Einwirkung durch einfaches Lagern in Raumtemperatur oder Umgebungstemperatur erfolgen, bevorzugt erfolgt das Abkühlen aber kontrolliert. Vor, während oder nach der Abkühlung wird der Stahldraht 1 aufgehaspelt 14, was aufgrund des weichen Gefügezustands ohne weiteres möglich ist. Zum Abkühlen kann auch ein Wärmetauscher bereitgestellt werden, so dass die Abwärme dem Prozess wieder zugeführt werden kann.

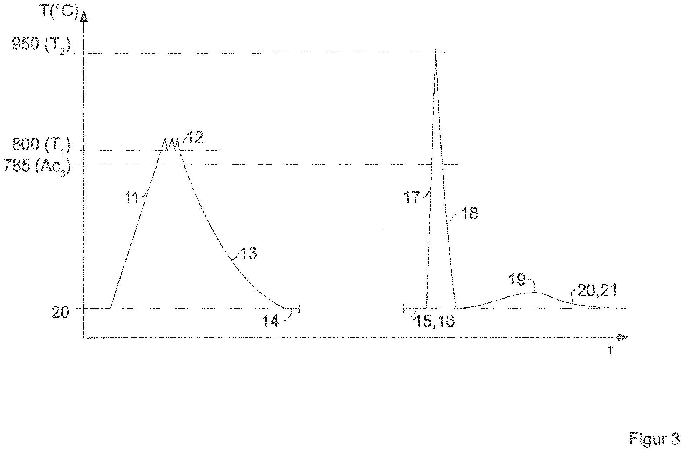

Wenn der Stahldraht 1 nun aufgehaspelt ist, kann er von einer Verarbeitungsstelle zur nächsten Verarbeitungsstelle transportiert und dort weiterverarbeitet werden. In der Figur 3 ist dies durch eine Lücke im Temperaturverlauf nach dem Aufhaspeln 14 verdeutlicht. Ein Federhersteller kann nun den durch thermomechanische Umformung vorbehandelten Stahldraht 1 von einem Stahldrahthersteller zukaufen und muss nicht die für die TMU erforderlichen Anlagen bei sich vorhalten. Dies spart dem Federhersteller Platz und Investitionskosten ein.

Nach einem beliebigen Zeitraum der Lagerung und/oder des Transports beginnt das Vergüten des Stahldrahts 1, welches sich folglich nicht mehr unmittelbar (auch örtlich) an die TMU anschließen muss. Nach einem Abhaspeln 15 kann noch eine Bearbeitung, beispielsweise ein Schleifen 16, vor dem Vergüten erfolgen. Anschließend wird zur Einleitung der Vergütung der Stahldraht auf eine Härtungstemperatur T2 deutlich oberhalb der Austenitisierungstemperatur Ac3 bzw. der Umformtemperatur T1 erhitzt 17. Im vorliegenden Fall liegt die Härtungstemperatur T2 bei in etwa 950°C. Das Erhitzen erfolgt sehr schnell und wird vorzugsweise induktiv durchgeführt. Die Erhitzung erfolgt mit einer Heizgeschwindigkeit von mindestens 50 K/s, vorzugsweise mindestens 100 K/s. Anschließend erfolgt das Abschrecken 18, z.B. in einem Wasser- oder einem Ölbad, wodurch sich ein wenigstens teilweise martensitisches Gefüge einstellt. Anschließend wird der Stahldraht 1 angelassen 19.

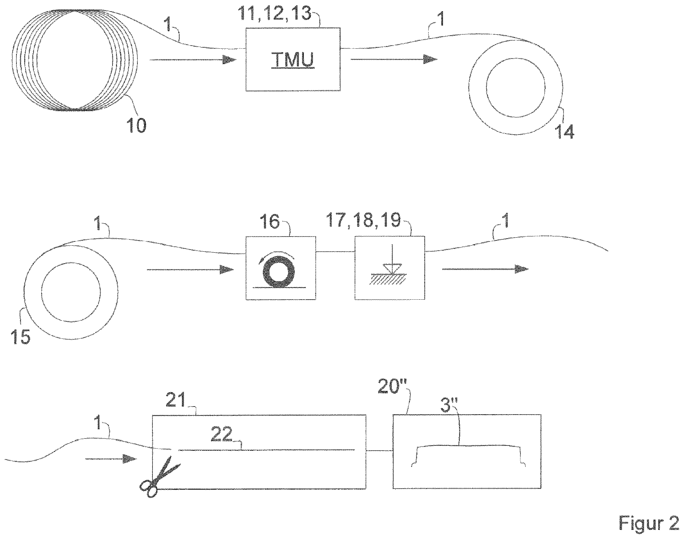

In einer ersten Ausgestaltung, wie es in Figur 1 gezeigt ist, wird der vergütete Stahldraht 1 nun zu Schraubenfedern 3' kaltgewunden 20' und anschließend vom Stahldraht 1 geschnitten 21. In einer alternativen Ausgestaltung, wie es in Figur 2 gezeigt ist, wird der vergütete Stahldraht 1 zunächst in einzelne Federstäbe 22 geschnitten 21 und anschließend zu Drehstabfedern 3" kaltgebogen 20".

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Gewerbliche Anwendbarkeit

Federn und/oder Drehstäbe der vorbeschriebenen Art werden beispielsweise in der Produktion von Kraftfahrzeugen, insbesondere von Fahrwerken der Kraftfahrzeuge eingesetzt.

### Bezugszeichenliste

- 1: Stahldraht
- 2: Federstab
- 3': Schraubenfeder
- 3": Drehstabfeder
- 10: Ring
- 11: Erhitzen
- 12: Thermomechanisches Umformen (TMU)
- 13: Abkühlen
- 14: Aufhaspeln
- 15: Abhaspeln
- 16: Schleifen
- 17: Erwärmen
- 18: Abschrecken
- 19: Anlassen
- 20': Kaltwinden
- 20": Kaltbiegen
- 21: Schneiden
- 22: FederstabB

## Patentansprüche

1. Feder (3') oder Drehstab (3") hergestellt aus einem Stahldraht (1) durch Kaltumformen (20', 20") nach einem Verfahren mit den folgenden Schritten:
a) Bereitstellen eines Stahldrahts (1);
b) Thermomechanisches Umformen (12) des in Schritt a) bereitgestellten Stahldrahts (1), oberhalb der Mindestrekristallisationstemperatur des Stahldrahts (1), wobei der Stahldraht (1) ein wenigstens teilweise austenitisches Gefüge aufweist;
c) Abkühlen des in Schritt b) thermomechanisch umgeformten Stahldrahts (1);
d) Vergüten des Stahldrahts (1), umfassend
I. Erwärmen (17) des in Schritt c) abgekühlten Stahldrahts (1) wenigstens auf eine Härtungstemperatur, welche gleich oder größer ist als die Austenitstarttemperatur;
II. Abschrecken (18) des in Schritt I. wenigstens auf die Härtungstemperatur erwärmten Stahldrahts (1) auf eine erste Abkühltemperatur, wobei die erste Abkühltemperatur eine Temperatur unterhalb der Mindestrekristallisationstemperatur des Stahldrahts (1) ist und sich ein wenigstens teilweise martensitisches Gefüge einstellt, wobei die Feder oder der Drehstab einen Martensitanteil von größer 40 Vol-% aufweisen;
III. Wiedererwärmen des in Schritt II. abgeschreckten Stahldrahts (1) auf eine erste Anlasstemperatur, welche kleiner ist als die Austenitstarttemperatur;
IV. Abkühlen des in Schritt III. wiedererwärmten Stahldrahts (1) auf eine zweite Abkühltemperatur, wobei die zweite Abkühltemperatur wenigstens kleiner ist als die erste Anlasstemperatur;
e) Kaltumformen (20', 20") des in Schritt d) vergüteten Stahldrahts (1), bei einer Kaltumformtemperatur, wobei die Kaltumformtemperatur eine Temperatur unterhalb der Mindestrekristallisationstemperatur des Stahldrahts (1) ist;
f) Vereinzeln (21) des in Schritt e) kaltumgeformten Stahldrahts (1);
**dadurch gekennzeichnet, dass**
beim Abkühlen des Stahldrahts (1) in Schritt c) auf eine Temperatur unterhalb der Mindestrekristallisationstemperatur derart abgekühlt wird, dass sich in dem Stahldraht (1) wenigstens ein teilweise ferritisch-perlitisches Gefüge einstellt.

2. Feder (3') oder Drehstab (3") nach Anspruch 1, **dadurch gekennzeichnet, dass** die Reihenfolge der Schritte e) und f) beliebig ist.

3. Feder (3') oder Drehstab (3") nach einem der Ansprüche 1 bis 2, **dadurch gekennzeichnet, dass** das Thermomechanische Umformen in Schritt b) bei einer Temperatur, welche gleich oder größer der Austenitstarttemperatur, vorzugsweise gleich oder größer der Austenitendtemperatur, besonders bevorzugt im Bereich von der Austenitendtemperatur bis 50 °C größer als die Austenitendtemperatur ist, erfolgt.

4. Feder (3') oder Drehstab (3") nach einem der Ansprüche 1 bis 3, **dadurch gekennzeichnet, dass** das Abkühlen des Drahts in Schritt c) wenigstens auf eine Temperatur unterhalb der Mindestrekristallisationstemperatur, vorzugsweise unterhalb einer Temperatur von 200 °C, besonders bevorzugt unterhalb einer Temperatur von 50 °C, erfolgt.

5. Verwendung eines Stahldrahts (1) zur Herstellung von kaltgeformten Federn (3') und/oder Drehstäben nach einem der Ansprüche 1 bis 4 mit den Schritten:
a) Bereitstellen eines Stahldrahts (1);
b) Thermomechanisches Umformen (12) des in Schritt a) bereitgestellten Stahldrahts (1), oberhalb der Mindestrekristallisationstemperatur des Stahldrahts (1), wobei der Stahldraht (1) ein wenigstens teilweise austenitisches Gefüge aufweist;
c) Abkühlen des in Schritt b) thermomechanisch umgeformten Stahldrahts (1);
d) Vergüten des Stahldrahts (1), umfassend
I. Erwärmen (17) des in Schritt c) abgekühlten Stahldrahts (1) wenigstens auf eine Härtungstemperatur, welche gleich oder größer ist als die Austenitstarttemperatur;
II. Abschrecken (18) des in Schritt I. wenigstens auf die Härtungstemperatur erwärmten Stahldrahts (1) auf eine erste Abkühltemperatur, wobei die erste Abkühltemperatur eine Temperatur unterhalb der Mindestrekristallisationstemperatur des Stahldrahts (1) ist und sich ein wenigstens teilweise martensitisches Gefüge einstellt, wobei die Feder oder der Drehstab einen Martensitanteil von größer 40 Vol-% aufweisen;
III. Wiedererwärmen des in Schritt II. abgeschreckten Stahldrahts (1) auf eine erste Anlasstemperatur, welche kleiner ist als die Austenitstarttemperatur;
IV. Abkühlen des in Schritt III. wiedererwärmten Stahldrahts (1) auf eine zweite Abkühltemperatur, wobei die zweite Abkühltemperatur wenigstens kleiner ist als die erste Anlasstemperatur;
e) Kaltumformen (20', 20") des in Schritt d) vergüteten Stahldrahts (1), bei einer Kaltumformtemperatur, wobei die Kaltumformtemperatur eine Temperatur unterhalb der Mindestrekristallisationstemperatur des Stahldrahts (1) ist;
f) Vereinzeln (21) des in Schritt e) kaltumgeformten Stahldrahts (1);
**dadurch gekennzeichnet, dass**
beim Abkühlen des Stahldrahts (1) in Schritt c) auf eine Temperatur unterhalb der Mindestrekristallisationstemperatur derart abgekühlt wird, dass sich in dem Stahldraht (1) wenigstens ein teilweise ferritisch-perlitisches Gefüge einstellt.
